# EUROPÄISCHE PATENTSCHRIFT

(11) **EP 2 044 317 B1**
(45) Veröffentlichungstag und Bekanntmachung des Hinweises auf die Patenterteilung: **16.01.2013**
(21) Anmeldenummer: 07765465.5
(22) Anmeldetag: 18.06.2007
(51) Int. Cl.: F02D 41/20, F02D 41/22

(54) **VERFAHREN ZUR ERMITTLUNG EINES FEHLERS IN EINER KRAFTSTOFFZUMESSEINHEIT EINES EINSPRITZSYSTEMS**
METHOD FOR DETERMINING AN ERROR IN A FUEL METERING UNIT FOR FUEL INJECTION SYSTEM
PROCÉDÉ DE DÉTERMINATION D'UNE ERREUR DANS UNE UNITÉ DE DOSAGE DE CARBURANT D'UN SYSTÈME D'INJECTION

(30) Priorität: 18.07.2006 DE 102006033142; 17.11.2006 DE 102006054316
(43) Veröffentlichungstag der Anmeldung: 08.04.2009
(73) Patentinhaber: Robert Bosch GmbH, 70442 Stuttgart (DE)
(72) Erfinder: SOMMERER, Andreas, 71394 Kernen (DE); MUELLER, Andreas, 74348 Lauffen A.n. (DE); BECKER, Bernd, 71726 Benningen (DE)
(86) Internationale Anmeldenummer: PCT/EP2007/056011
(87) Internationale Veröffentlichungsnummer: WO 2008/009527

(56) Entgegenhaltungen:
- EP-A1- 0 358 972
- DE-A1- 4 334 386
- DE-A1- 10 223 014
- DE-A1- 19 845 042
- DE-A1-102004 005 851
- US-A- 4 736 267
- US-B1- 6 384 512

## Beschreibung

### Stand der Technik

Die vorliegende Erfindung betrifft ein Verfahren zur Ermittlung eines Fehlers in einer Kraftstoffzumesseinheit eines Einspritzsystems für eine Brennkraftmaschine. Die Erfindung betrifft des Weiteren eine Vorrichtung, insbesondere ein Steuergerät für eine Brennkraftmaschine, sowie ein Computerprogramm zur Durchführung des erfindungsgemäßen Verfahrens.

In heutigen Common-Rail-Dieseleinspritzsystemen wird der Kraftstoffdruck für die Einspritzung elektronisch geregelt. Dabei dient als Stellglied eine Kraftstoffzumesseinheit im Niederdruckbereich vor der Hochdruckpumpe. Eine derartige Kraftstoffzumesseinheit ist beispielsweise aus der DE 19612413 bekannt.

DE 102230014 zeiftein Verfahren zur Diagnose eines fehlerhaften Stromkreises der Kraftstoffzumesseinheit bekannt, aaf Basis are elektrischen signalen.

### Offenbarung der Erfindung

Eine Aufgabe der vorliegenden Erfindung ist es daher, ein Verfahren anzugeben, das einen Fehler in dem Stromkreis der Kraftstoffzumesseinheit detektieren kann.

Dieses Problem wird gelöst durch ein Verfahren zur Ermittlung eines Fehlers in einer Kraftstoffzumesseinheit eines Einspritzsystems für eine Brennkraftmaschine, wobei der Gradient eines ersten eine physikalische Größe repräsentierenden Signals und eines zweiten eine physikalische Größe repräsentierenden Signals bestimmt werden, und bei einer vorgegebenen Größe und/oder Richtung der beiden Gradienten automatisch auf einen Fehler erkannt wird. Unter einer vorgegebenen Größe des Gradienten wird hier die Steilheit, also die Veränderung des Signals innerhalb eines (kurzen) Zeitraums, des Signals verstanden. Wobei ein Fehler erkannt wird, wenn die Gradienten des ersten Signals und des zweiten Signals innerhalb eines Zeitfensters entgegengesetzt sind. Unter der Richtung des Gradienten wird hier verstanden, ob sich das Signal zu größeren oder kleineren Werten hin verändert.

Dabei ist vorgesehen, dass das erste Signal eine Soll-Fördermenge oder einen Raildruck präsentiert. Dabei kann das erste Signal auch ein Ansteuersignal für die Kraftstoffzumesseinheit repräsentieren. Das zweite Signal repräsentiert einen durch den Aktor der Kraftstoffzumesseinheit fließenden Strom.

Vorzugsweise ist das Ansteuersignal für die Kraftstoffzumesseinheit ein Maß für den Raildruck, da die Regelung für den Raildruck über die Stellgröße des Raildrucks, dies ist hier das Ansteuersignal für die Kraftstoffzumesseinheit, einen Rückschluss auf den Ist-Raildruck erlaubt.

Vorzugsweise ist weiter vorgesehen, dass das Ansteuersignal eine Spannung an einem Aktor der Kraftstoffzumesseinheil ist. Weiter ist vorzugsweise vorgesehen, dass das Ansteuersignal ein Tastverhältnis der Spannung an dem Aktor der Kraftstoffzumesseinheit umfasst. Unter Tastverhältnis wird hier das zeitliche Verhältnis von High-Werten zu Low-Werten eines Rechtecksignals verstanden, es handelt sich hier also um ein pulsweitenmoduliertes Signal.

Vorzugsweise kann das Zeitfenster beliebig klein oder groß gewählt werden und zu einer beliebigen Zeit gesetzt werden. Vorzugsweise wird auf einen Fehler erkannt, wenn der Gradient des ersten Signals innerhalb des Zeitfensters positiv und der Gradient des zweiten Signals innerhalb des Zeitfensters negativ ist. Vorzugsweise ist der Fehler, auf den durch das erfindungsgemäße Verfahren erkannt wird, ein zumindest zeitweise unterbrochener Stromkreis des Aktors, beispielsweise durch einen so genannten Wackelkontakt, also eine z. B. durch Vibrationen zeitweise geöffnete oder geschlossene Kontaktstelle.

Das eingangs genannte Problem wird auch gelöst durch eine Vorrichtung, insbesondere ein Steuergerät für eine Brennkraftmaschine, mit Mitteln zur Ermittlung eines Fehlers in einer Kraftstoffzumesseinheit eines Einspritzsystems für die Brennkraftmaschine, wobei der Gradient eines ersten eine physikalische Größe repräsentierenden Signals und eines zweiten eine physikalische Größe repräsentierenden Signals bestimmt werden und bei einer vorgegebenen Größe und/oder Richtung der beiden Gradienten automatische auf einen Fehler erkannt wird.

Das eingangs genannte Problem wird auch gelöst durch ein Computerprogramm mit Programmcode zur Durchführung aller Schritte eines erfindungsgemäßen Verfahrens, wenn das Programm in einem Computer ausgeführt wird.

### Kurze Beschreibung der Zeichnungen

Nachfolgend wird ein Ausführungsbeispiel der vorliegenden Erfindung anhand der beiliegenden Zeichnungen näher erläutert. Dabei zeigen:
- Fig. 1: eine Skizze eines Kraftstoffsystems einer Brennkraftmaschine;
- Fig. 2: eine Skizze für Beispiele von Amplituden physikalischer Größen eines Einspritzsystems.

### Ausführungsform(en) der Erfindung

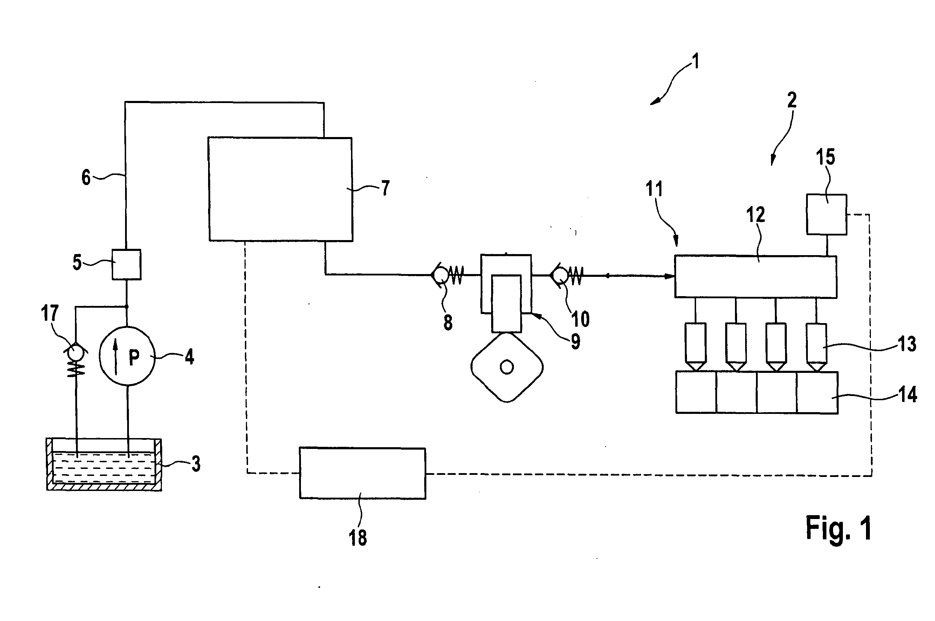

Ein Kraftstoffsystem 1 gemäß Fig. 1 ist Teil einer Brennkraftmaschine 2, die beispielsweise in ein Kraftfahrzeug (nicht dargestellt) eingebaut sein kann. Das Kraftstoffsystem 1 umfasst einen Kraftstoffbehälter 3, aus dem eine elektrisch angetriebene Vorförderpumpe 4 Kraftstoff über einen Filter 5 in eine Niederdruck-Kraftstoffleitung 6 fördert. Diese führt über eine Zumesseinheit 7 zu einem Einlassventil 8 einer Hochdruckpumpe 9, welche über ein Auslassventil 10 in einen Hochdruckbereich 11 fördert, der unter anderem einen Kraftstoffrail 12 umfasst. An diesen sind mehrere Injektoren 13 angeschlossen, die jeweils direkt in ihnen zugeordnete Brennräume 14 einspritzen. Der Druck im Hochdruckbereich 11 wird von einem Drucksensor 15 erfasst und von einem Druckbegrenzungsventil 16 begrenzt. Ein ähnliches Druckbegrenzungsventil 17 ist auch parallel zur Vorförderpumpe 16 vorhanden. Die Zumesseinheit 7 umfasst in einem Gehäuse einen Ventilschieber der von einem Aktor, der über eine nicht gezeigte Endstufe von einer Steuer- und Regeleinrichtung 18 angesteuert wird. Diese erhält Signale unter anderem auch vom Drucksensor 15.

Der Drucksensor 15 liefert ein elektrisches Signal an die Steuer- und Regeleinrichtung 18, angedeutet durch eine gestrichelte Linie, das den Raildruck p_{R} in dem Hochdruckbereich 11 repräsentiert. Die Steuer- und Regeleinrichtung 18 liefert ein elektrisches Signal an die Zumesseinheit 7, genauer gesagt an den nicht näher dargestellten Aktor der Zumesseinheit 7, das den Ventilschieber öffnet und schließt. Durch das Öffnen und Schließen des Venfilschiebers der Zumesseinheit 7 wird die Niederdruck-Kraftstoffleitung 6 bei geöffnetem Ventil mit dem Einlassventil 8 der Hochdruckpumpe 9 verbunden und bei geschlossenem Ventil von diesem getrennt. Die Ansteuerspannung für den Aktor der Zumesseinheit 7 ist vorzugsweise eine Rechteckspannung. Die Rechteckspannung weist ein hohes Spannungsniveau (high) und ein niedriges Spannungsniveau (log) auf. Das niedrige Spannungsniveau ist vorzugsweise 0 V. Der Ventilschieber der Zumesseinheit 7 wird bei dem hohen Spannungsniveau geschlossen und bei dem niedrigen Spannungsniveau geöffnet. Je nach Ausführung von Ventilschieber und Aktor der Zumesseinheit 7 kann dies auch umgekehrt sein, dass also die Zumesseinheit bei dem hohen Spannungsniveau öffnet und bei dem niedrigen Spannungsniveau schließt. Das Zeitverhältnis zwischen dem hohen Spannungsniveau und dem niedrigen Spannungsniveau wird als Tastverhältnis bezeichnet.

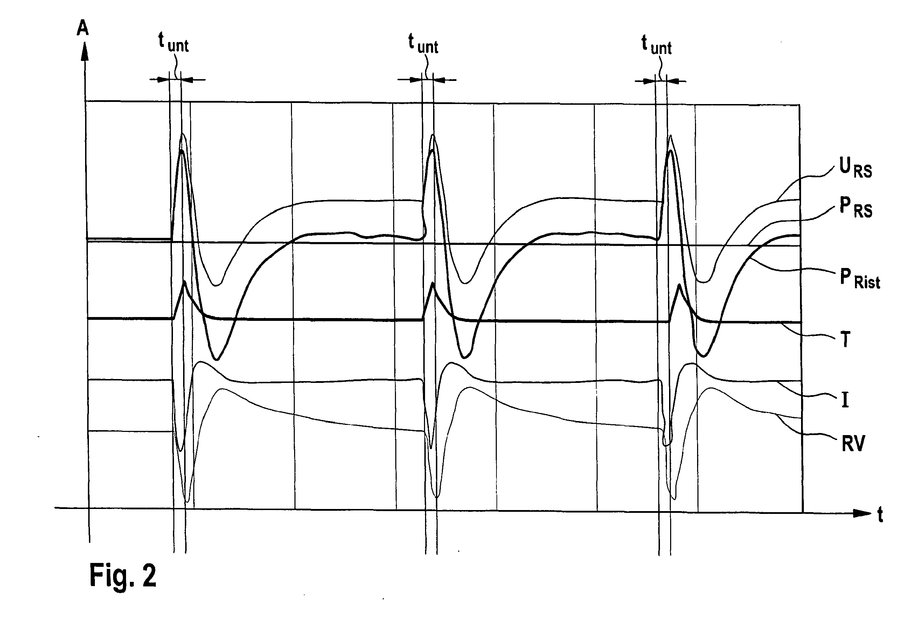

Fig. 2 zeigt die Amplituden verschiedener physikalische Größen repräsentierenden Signale (Messgrößen) des Einspritzsystems. Dargestellt sind (dimensionslose) Amplituden der die physikalischen Größen repräsentierenden Signale, die Amplituden sind generalisiert als A bezeichnet, über der Zeit t. Dargestellt ist der Soll-Wert des Raildruckes p_{RS}. Weiter dargestellt ist der Ist-Wert des Raildruckes pᵣₑᵢₛₜ, der Spannungsrohwert des Raildruckes U_{RS}, das Tastverhältnis für die Bestromung der Zumesseinheit 7 T, der Stromverlauf der Zumesseinheit 7 l sowie die Reglervorgabe RV. In dem Diagramm dargestellt ist weiter jeweils eine Unterbrechungszeit tᵤₙₜ. Während der Unterbrechungszeit tᵤₙₜ ist der Stromkreis des Aktors der Zumesseinheit 7 aufgetrennt, beispielsweise durch einen Wackelkontakt oder dergleichen innerhalb des Stromkreises. Durch das Auftrennen des Stromkreises steigt der Gradient des Tastverhältnisses T an, da die im vorliegenden Ausführungsbeispiel nicht dargestellte Regelung für den Raildruck versucht, den Ist-Wert des Raildruckes pᵣₑᵢₛₜ auf den Soll-Wert des Raildruckes p_{RS} zurück zu regeln. Durch den geöffneten Stromkreis ist das Ventil der Zumesseinheit 7 geöffnet, so dass der Ist-Raildruck pᵣₑᵢₛₜ ansteigt. Ein positiver Gradient des Tastverhältnisses bedeutet, dass der Mittelwert der Rechteckspannung steigt, dass also die Zeiten, in denen das Signal auf dem Wert "high" ist, länger werden und die Zeiten, in denen das Signal auf dem Wert "log" ist, kürzer werden. Durch die Unterbrechung des Stromkreises für die Zeit tᵤₙₜ verringert sich gleichzeitig der Stromfluss, dies äußert sich in einem negativen Gradienten des Stromes I. Wie aus Fig. 2 zu erkennen ist, hat das Öffnen des Stromkreises des Aktors der Zumesseinheit 7 also zur Folge, dass das Tastverhältnis T aus der Reglervorgabe RV einen positiven Gradienten aufweist, der Strom gleichzeitig aber einen negativen Gradienten aufweist.

Bei einem Wackelkontakt wird während der Kontaktunterbrechung die Zumesseinheit 7 nicht bestromt. Die Folge ist, dass der Raildruck aufgrund der sich öffnenden Zumesseinheit 7 einen ansteigenden Gradienten hat. Die Reglervorgabe des Tastverhältnisses steigt um den Raildruck auf die Sollvorgabe, hat aber keine Auswirkungen auf den Raildruck, bis der Kontakt wieder geschlossen ist. Die unterschiedlichen Vorzeichen des Gradienten des tatsächlichen Stromverlaufs und des Tastverhältnisses der Reglervorgabe wird genutzt, um eindeutig auf einen Wackelkontakt zu schließen. Die beschriebene Wackelkontakterkennung der Kraftstoffzumesseinheit ist im Common-Rail-Einspritzsystem einsetzbar, in dem der Kraftstoffdruck von einer Zumesseinheit geregelt wird und das Steuergerät die Ressource besitzt, den Gradienten des Tastverhältnisses der Reglervorgabe und des tatsächlichen Stromverlaufs der Zumesseinheit auszuwerten.

## Patentansprüche

1. Verfahren zur Ermittlung eines Fehlers in einer Kraftstoffzumesseinheit (7) eines Einspritzsystems (1) für eine Brennkraftmaschine (2), wobei der Gradient eines ersten eine physikalische Größe repräsentierenden Signals und eines zweiten eine physikalische Größe repräsentierenden Signals bestimmt werden und bei einer vorgegeben Größe und/oder Richtung der beiden Gradienten automatisch auf einen Fehler erkannt wird, **dadurch gekennzeichnet, dass** auf einen Fehler erkannt wird, wenn die Gradienten des ersten Signals und des zweiten Signals innerhalb eines Zeitfensters entgegengesetzt sind, wobei das erste Signal eine Soll-Fördermenge, einen Raildruck (p_{R}) oder ein Ansteuersignal für die Kraftstoffzumesseinheit (7) repräsentiert, wobei das Ansteuersignal insbesondere eine Spannung an einem Aktor der Kraftstoffzumesseinheit (7) ist, und dass das zweite Signal einen durch den Aktor der Kraftstoffzumesseinheit (7) fließenden Strom repräsentiert.

2. Verfahren nach Anspruch 3, **dadurch gekennzeichnet, dass** das Ansteuersignal ein Tastverhältnis der Spannung an dem Aktor der Kraftstoffzumesseinheit (7) umfasst.

3. Verfahren nach Anspruch 1, **dadurch gekennzeichnet, dass** auf einen Fehler erkannt wird, wenn der Gradient des ersten Signals innerhalb des Zeitfensters positiv und der Gradient des zweiten Signals innerhalb des Zeitfensters negativ ist.

4. Verfahren nach einem der vorhergehenden Ansprüche, **dadurch gekennzeichnet, dass** der Fehler ein zumindest zeitweise unterbrochener Stromkreis des Aktors ist.

5. Vorrichtung, insbesondere Steuergerät für eine Brennkraftmaschine, mit Mitteln zur Ermittlung eines Fehlers in einer Kraftstoffzumesseinheit (7) eines Einspritzsystems (1) für die Brennkraftmaschine (2, wobei der Gradient eines ersten eine physikalische Größe repräsentierenden Signals und eines zweiten eine physikalische Größe repräsentierenden Signals bestimmt werden und bei einer vorgegeben Größe und/oder Richtung der beiden Gradienten automatisch auf einen Fehler erkannt wird, **dadurch gekennzeichnet, dass** auf einen Fehler erkannt wird, wenn die Gradienten des ersten Signals und des zweiten Signals innerhalb eines Zeitfensters entgegengesetzt sind, wobei das erste Signal eine Soll-Fördermenge, einen Raildruck (p_{R}) oder ein Ansteuersignal für die Kraftstoffzumesseinheit (7) repräsentiert, wobei das Ansteuersignal insbesondere eine Spannung an einem Aktor der Kraftstoffzumesseinheit (7) ist, und dass das zweite Signal einen durch den Aktor der Kraftstoffzumesseinheit (7) fließenden Strom repräsentiert.

6. Computerprogramm mit Programmcode zur Durchführung aller Schritte nach einem der Ansprüche 1 bis 7, wenn das Programm in einem Computer ausgeführt wird.

## Claims

1. Method for determining a fault in a fuel-metering unit (7) of an injection system (1) for an internal combustion engine (2), wherein the gradient of a first signal which represents a physical variable and of a second signal which represents a physical variable are determined, and a fault is automatically detected given a predefined value and/or direction of the two gradients, **characterized in that** a fault is detected if the gradients of the first signal and of the second signal are opposed within a time window, wherein the first signal represents a setpoint delivery quantity, a rail pressure (p_{R}) or an actuation signal for the fuel metering unit (7), wherein the actuation signal is, in particular, a voltage at an actuator of the fuel-metering unit (7), and **in that** the second signal represents a current flowing through the actuator of the fuel-metering unit (7).

2. Method according to Claim 1, **characterized in that** the actuation signal comprises a pulse duty factor of the voltage at the actuator of the fuel-metering unit (7).

3. Method according to Claim 1, **characterized in that** a fault is detected if the gradient of the first signal within the time window is positive and the gradient of the second signal within the time window is negative.

4. Method according to one of the preceding claims, **characterized in that** the fault is an at least temporarily interrupted circuit of the actuator.

5. Device, in particular a control device, for an internal combustion engine, having means for determining a fault in a fuel-metering unit (7) of an injection system (1) for the internal combustion engine (2), wherein the gradient of a first signal which represents a physical variable and of a second signal which represents a physical variable are determined, and a fault is automatically detected given a predefined variable and/or direction of the two gradients, **characterized in that** a fault is detected if the gradients of the first signal and of the second signal are opposed within a time window, wherein the first signal represents a setpoint delivery quantity, a rail pressure (p_{R}) or an actuation signal for the fuel-metering unit (7), wherein the actuation signal is, in particular, a voltage at an actuator of the fuel-metering unit (7), and **in that** the second signal represents a current flowing through the actuator of the fuel-metering unit (7).

6. Computer program having program code for carrying out all the steps according to one of Claims 1 to 4 when the program is run in a computer.

## Revendications

1. Procédé pour déterminer un défaut dans une unité de dosage de carburant (7) d'un système d'injection (1) pour un moteur à combustion interne (2), le gradient d'un premier signal représentant une grandeur physique et celui d'un deuxième signal représentant une grandeur physique étant déterminés et un défaut étant reconnu automatiquement en présence d'une grandeur et/ou d'une direction prédéfinie des deux gradients, **caractérisé en ce qu'**un défaut est reconnu lorsque les gradients du premier signal et du deuxième signal sont opposés à l'intérieur d'un créneau temporel, le premier signal représentant un volume transporté de consigne, une pression de rampe de distribution (p_{R}) ou un signal de commande pour l'unité de dosage de carburant (7), le signal de commande étant notamment une tension aux bornes d'un actionneur de l'unité de dosage de carburant (7), et **en ce que** le deuxième signal représente un courant qui circule à travers l'actionneur de l'unité de dosage de carburant (7).

2. Procédé selon la revendication 1, **caractérisé en ce que** le signal de commande comprend un rapport cyclique de la tension aux bornes de l'actionneur de l'unité de dosage de carburant (7).

3. Procédé selon la revendication 1, **caractérisé en ce qu'**un défaut est reconnu lorsque le gradient du premier signal est positif à l'intérieur du créneau temporel et le gradient du deuxième signal est négatif à l'intérieur du créneau temporel.

4. Procédé selon l'une des revendications précédentes, **caractérisé en ce que** le défaut est un circuit électrique de l'actionneur interrompu au moins temporairement.

5. Dispositif, notamment contrôleur pour un moteur à combustion interne, comprenant des moyens pour déterminer un défaut dans une unité de dosage de carburant (7) d'un système d'injection (1) pour le moteur à combustion interne (2), le gradient d'un premier signal représentant une grandeur physique et celui d'un deuxième signal représentant une grandeur physique étant déterminés et un défaut étant reconnu automatiquement en présence d'une grandeur et/ou d'une direction prédéfinie des deux gradients, **caractérisé en ce qu'**un défaut est reconnu lorsque les gradients du premier signal et du deuxième signal sont opposés à l'intérieur d'un créneau temporel, le premier signal représentant un volume transporté de consigne, une pression de rampe de distribution (p_{R}) ou un signal de commande pour l'unité de dosage de carburant (7), le signal de commande étant notamment une tension aux bornes d'un actionneur de l'unité de dosage de carburant (7), et **en ce que** le deuxième signal représente un courant qui circule à travers l'actionneur de l'unité de dosage de carburant (7).

6. Programme informatique comprenant un code de programme pour exécuter toutes les étapes selon l'une des revendications 1 à 4 lorsque le programme est exécuté dans un ordinateur.
